(19) Europäisches Patentamt
European Patent Office
Office européen des brevets

(11) **EP 1 921 790 A1**

(12) **EUROPEAN PATENT APPLICATION**

(43) Date of publication:
**14.05.2008 Bulletin 2008/20**

(51) Int Cl.:
***H04L 9/00*** (2006.01)    ***H04L 9/32*** (2006.01)

(21) Application number: **08101261.9**

(22) Date of filing: **15.04.2003**

(84) Designated Contracting States:
**AT BE BG CH CY CZ DE DK EE ES FI FR GB GR HU IE IT LI LU MC NL PT RO SE SI SK TR**

(30) Priority: **15.04.2002 US 372668 P**

(62) Document number(s) of the earlier application(s) in accordance with Art. 76 EPC:
**03747014.3 / 1 497 948**

(71) Applicant: **NTT DoCoMo Inc.**
**Chiyoda-Ku**
**Tokyo 100-6150 (JP)**

(72) Inventor: **Gentry, Craig**
**Mountain View, CA 94041 (US)**

(74) Representative: **Skone James, Robert Edmund**
**Gill Jennings & Every LLP**
**Broadgate House**
**7 Eldon Street**
**London EC2M 7LH (GB)**

Remarks:
This application was filed on 04-02-2008 as a divisional application to the application mentioned under INID code 62.

(54) **Signature schemes using bilinear mappings**

(57) Methods and systems are provided for generating and verifying signatures of digital messages communicated between signers and verifiers. Using bilinear mappings, such as Weil or Tate pairings (104), these methods and systems enable generation and verification of efficient multisignatures, identity-based ring signatures, hierarchical proxy signatures, and hierarchical online/offline signatures.

Select first and second cyclic groups — 102

Select pairing function — 104

Select a generator of the first cyclic group — 106

Select function to map between first and second cyclic groups — 108

Select a private key for each of the signers — 110

Generate message function values for each of the messages — 112

Generate signature components — 114

Generate multisignature using signature components — 116

Verify multisignature — 118

*FIG. 1*

**Description**

RELATED APPLICATIONS

Applicants hereby claim priority under 35 U.S.C. § 119(e) to provisional U.S. patent application Ser. No. 60/372,668, filed on April 15, 2002, which is incorporated herein by reference.

FIELD OF THE INVENTION

The present invention relates in general to cryptography and secure communication via computer networks or via other types of systems and devices, and more particularly to schemes for generating and verifying signatures of communications in systems using public key cryptography.

BACKGROUND ART

Generally speaking, in systems using public key cryptography, each party is associated with both a private and a public key. The public keys are known publicly, or are available from a Certificate Authority. To sign a message, a signer uses its private key. Because the signer's private and public keys are related, a verifier may then verify the signature using the signer's public key. Because the signer's private key is known only to the signer (and perhaps to a private key generator, or PKG), third parties are not able to forge the signer's signature.

The various embodiments of the present invention also are compatible with identity-based signature schemes. Roughly speaking, identity-based signature schemes are public key schemes in which the public key of an entity is derived from information associated with the entity's identity. For instance, the identity information may be personal information (*i.e.,* name, address, email address, etc.), or computer information (*i.e.*, IP address, etc.). In addition, identity information may include not only information that is strictly related to an entity's identity, but also widely available information such as the time or date. That is, the importance of the concept of identity information is not its strict relation to the entity's identity, but that the information is readily available to anyone who wishes to encrypt a message to the entity.

An entity's private key in an identity-based system using public key cryptography is generated and distributed by a trusted party or logical process, typically known as a private key generator ("PKG"). The PKG uses a master secret to generate private keys. Because an entity's public key may be derived from its identity, when Bob wants to verify a signature from Alice, he does not need to retrieve Alice's public key from a database. Instead, Bob merely derives the key directly from Alice's identifying information. Databases of public keys are unnecessary. Certificate authorities ("CAs") also are unnecessary. There is no need to "bind" Alice's identity to his public key because his identity is his public key.

The concept of identity-based systems is not new. It was proposed in A. Shamir, Identity-Based Cryptosystems and Signatures Schemes, ADVANCES IN CRYPTOGRAPHY - CRYPTO '84, Lecture Notes in Computer Science 196 (1984), Springer, 47-53. However, practical identity-based signature schemes have not been found until recently.

Public key and identity-based systems have been further expanded by incorporating a hierarchical structure. For instance, identity-based schemes involve a hierarchy of logical or actual PKGs. A root PKG may issue private keys to other PKGs, who in turn may issue private keys to users in particular domains. This enables a verifier to verify a signature from a signer without an online lookup of the signer's public key or lower-level public parameters, even if the verifier is not in the system at all, as long as the verifier obtained the public parameters of the root PKG. Another advantage of a hierarchical identity-based signature scheme is damage control. For instance, disclosure of a domain PKG's secret would not compromise the secrets of higher-level PKGs, or of any other PKGs that are not direct descendents of the compromised domain PKG.

Although known public key and identity-based systems have provided schemes for generating and verifying digital signatures, the known signature schemes have had significant shortcomings. For instance, multisignature schemes have not enabled multiple signers to sign multiple documents. A multisignature scheme that enabled multiple signers to sign multiple documents would increase the efficiency of the signature even further. For instance, such a multisignature could be used to compress a certificate chain. Accordingly, there is a need for a signature scheme that allows multiple signers to sign multiple documents together.

There also is a need for ring signature schemes for identity-based systems using public key cryptography. Ring signatures were recently introduced in R. Rivest, A. Shamir, Y. Tauman, How to Leak a Secret, ADVANCES IN CRYPTOLOGY-ASIACRYPT 2001, Lecture Notes in Computer Science 2248 (2001), Spring, 552. Ring signatures enable a member of a group (not necessarily established *a priori*) to sign a message such that a third party can verify that some member of the group created the signature but cannot determine which member. However, efficient ring signature schemes have not been available for identity-based encryption schemes. Accordingly, there is a need for identity-based ring signature schemes.

There also is a need for proxy signatures, proxy decryption, delegation, and electronic voting in hierarchical identity-based systems using public key cryptography. Such features were proposed for non-hierarchical systems in P. Horster, H. Petersen, Self-Certified Keys-Concepts and Applications, PROC. 3 OF CONF. ON COMMUNICATIONS AND MULTIMEDIA SECURITY, 1997. However, these features have not been available for hierarchical systems. Accordingly, there is a need for hierarchical identity-based signature schemes that enable proxy signatures, proxy decryption, delegation, and electronic voting.

There also is a need for more efficient hierarchical identity-based signature schemes that enable a portion of the signature to be generated offline. For many applications, the online signing time is more important than the total signing time. In these cases, the efficiency of the scheme can be increased by enabling more of the signature and verification algorithms to be performed offline. Online/offline signature schemes were proposed in A. Shamir, Y. Tauman, Improved Online/Offline Signature Schemes, ADVANCES IN CRYPTOLOGY-CRYPTO 2001, Lecture Notes in Computer Science 2139 (2001), Springer, 355-367. However, online/offline signature schemes have not been available for hierarchical identity-based systems. Accordingly, there is a need for efficient online/offline hierarchical identity-based signature schemes.

It is therefore an object of the present invention to provide a multisignature scheme that allows multiple signers to sign multiple documents. It is another object of the present invention to provide an identity-based ring signature scheme. It is a further object of the present invention to provide a hierarchical identity-based signature scheme that enables proxy signatures, proxy detection, delegation, and electronic voting. It is a still further object of the present invention to provide an efficient online/offline hierarchical identity-based signature scheme.

DISCLOSURE OF THE INVENTION

In accordance with the present invention, methods are provided for implementing secure, practical, and efficient signature schemes.

According to one aspect of the present invention, methods and systems are provided for generating and verifying a digital signature of digital messages communicated between signers and verifiers. According to these methods and schemes, each signer signs a subset of the messages, and the subset signed by a at least one signer is different from the subset signed by at least one other signer. A private key is selected for each of the signers and a message function value is generated for each of the messages using a predetermined function. One or more signature components are generated for each of the signers using at least the private key associated with each signer and the message function value associated with the message to be signed. A digital signature is generated using each of the signature components. The digital signature is then verified using at least the message function values.

According to another aspect of the present invention, methods and systems are provided for generating and verifying a digital signature of a digital message communicated between a signer and a verifier, wherein the signer is one of a plurality of members of a set. The signer is associated with an identity, and the other members of the set also are associated with identities. First and second cyclic group of elements are generated, and a bilinear, non-degenerate pairing is selected that is capable of generating an element of the second cyclic group from two elements of the first cyclic group. First and second generators of the first cyclic group are selected, as is a function capable of generating an element of the first cyclic group from a string of binary digits. Public points are generated for each of the members of the set, and a private point is generated for the signer. The digital message is signed by generating the digital signature using at least the signer's private point and the public point of each of the members of the set. Using at least the public point of each of the members of the set, the signature is verified to have been generated by a member of the set.

According to yet another aspect of the present invention, methods and systems are provided for generating and verifying a proxy signature of a digital message communicated between a proxy signer and a verifier, wherein the message is signed by the proxy signer on behalf of an original signer. An original signer private key and an original signer public key, both associated with the original signer, are selected. A proxy signer private key and a proxy signer public key, both associated with the proxy signer, also are selected. A proxy private key is then generated using the original signer private key and the proxy signer public key. A message function value is generated using a predetermined function, and the proxy signature is generated using at least the message function value, the proxy private key, and the proxy signer public key. The proxy signature may be verified using at least the original signer public key, the proxy signer public key, and the message function value.

According to still another aspect of the present invention, methods and systems are provided for generating and verifying a signature of a digital message communicated between a signer and a verifier. The signer is t levels below a root PKG in a hierarchical system. The signer is associated with an ID-tuple that includes identity information associated with the signer and with each of the *t*-1 lower-level PKGs in the hierarchy between the root PKG and the signer. A lower-level public key is generated for each of the lower-level PKGs. A signer private key associated with the signer is generated. In an offline mode, a random signer trapdoor secret, a random message, and a random number are selected. An offline signature is then generated using the random message, the random number, the trapdoor secret, the signer private key, and the lower-level public keys associated with the t-1 lower-level PKGs. In an online mode, a matching random number is determined such that the matching random number matches the offline signature with the message to be signed. The offline signature may then be verified using the matching random number.

BRIEF DESCRIPTION OF THE DRAWINGS

The subsequent description of the preferred embodiments of the present invention refers to the attached drawings, wherein:

**FIG. 1** shows a flow diagram illustrating a method of generating and verifying a multisignature Sig of a digital message $M$ according to one presently preferred embodiment of the invention;

**FIG. 2** shows a shows a flow diagram illustrating a method of generating and verifying a ring signature $Sig$ of a digital message $M$ communicated between a signer and a verifier according to another presently preferred embodiment of the invention;

**FIG. 3** shows a flow diagram illustrating a method of generating and verifying a ring signature $Sig$ of a digital message $M$ communicated between a signer and a verifier in a hierarchy according to another presently preferred embodiment of the invention;

**FIG. 4** shows a flow diagram illustrating a method of generating and verifying a proxy signature $Sig$ of a digital message $M$ according to another embodiment of the present invention;

**FIG. 5** shows a flow diagram illustrating a method of generating and verifying a signature $Sig$ of a digital message $M$ according to another embodiment of the present invention, wherein parts of the Signature and Verification algorithms may be completed offline; and

**FIG. 6** shows a block diagram depicting a system for implementing signature schemes according to another embodiment of the present invention.

MODE(S) FOR CARRYING OUT THE INVENTION

The presently preferred methods of the invention provide secure, practical, and efficient public key, identity-based, and hierarchical signature schemes.

The present invention provides public key signature schemes. These include both identity-based schemes and non-identity-based schemes. They also include both hierarchical and non-hierarchical schemes.

Each of the hierarchical identity-based signature schemes of the present invention requires a hierarchical structure of PKGs, including at least one root PKG and a plurality of lower-level PKGs. The hierarchy and the lower-level PKGs may be logical or actual. For instance, a single entity may generate both a root key generation secret and the lower-level key generation secrets from which lower-level users' encryption or signature keys are generated. In this case, the lower-level PKGs are not separate entities, but are merely processes or information arranged in a logical hierarchy and used to generate keys for descendent PKGs and users in the hierarchy. Alternatively, each lower-level PKG may be a separate entity. Another alternative involves a hybrid of actual and logical lower-level PKGs. For purposes of this disclosure, the term "lower-level PKG" will be used generically to refer to any of these alternatives.

In the context of the hierarchical identity-based systems disclosed herein, identity-based public keys may be based on time periods. For instance, a particular signer's identity may change with each succeeding time period. Alternatively, a signer may arrange the time periods as children or descendents of itself in a hierarchy, and a verifier would use the identity of the proper time period when verifying the signature. Either way, each key may be valid for signing messages only during the associated time period.

The hierarchical identity-based schemes of the present invention generally include five algorithms: Root Setup, Lower-level Setup, Extraction, Signing, and Verification. Three of these algorithms rely upon the identities of the relevant entities in the hierarchy. Each user preferably has a position in the hierarchy that may be defined by its tuple of IDs: $(ID_1,..., ID_t)$. The user's ancestors in the hierarchy are the root PKG and the users, or PKGs, whose ID-tuples are $\{(ID_1, ... , ID_i) : 1 < i < (t\text{-}1)\}$. The ID-tuples preferably are represented as binary strings for purposes of computations.

In the Root Setup algorithm, the root PKG uses a security parameter k to generate public system parameters *params* and a root key generation secret. The system parameters include a description of the message space $M$ and the signature space S. The system parameters will be publicly available, while only the root PKG will know the root key generation secret.

In the Lower-level Setup algorithm, each lower-level PKG preferably generates its own lower-level key generation secret for purposes of extraction. Alternatively, a lower-level PKG may generate random one-time secrets for each extraction.

In the Extraction algorithm, a PKG (whether the root PKG or a lower-level PKG) generates a private key for any of its children. The private key is generated using the system parameters, the generating PKG's private key, and any other preferred secret information.

In the Signing algorithm, the signer of a digital message signs the message $M \in M$ to generate a signature $Sig$

$\in S$ using *params* and the signer's private key d. In the Verification algorithm, the verifier of the signed message verifies the signature *Sig* using *params* and the ID-tuple of the signer. The Verification algorithm preferably outputs "valid" or "invalid". Signing and Verification also preferably satisfies a consistency constraint:

$$\forall M \in \mathcal{M} : \text{Verification}\ (\textit{params},\ \text{ID-tuple},\ \textit{Sig}) = \text{"valid"}$$

where *Sig = Signing(params, d, M)*.

## Pairings

The presently preferred signature schemes of the present invention are based on pairings, such as, for instance, the Weil or Tate pairings associated with elliptic curves or abelian varieties. The signature schemes also are based on the Diffie-Hellman Problem or the Bilinear Diffie-Hellman Problem. In either case, the schemes use two cyclic groups $G_1$ and $G_2$, preferably of the same large prime order $q$. The first group $G_1$ preferably is a group of points on an elliptic curve or abelian variety, and the group law on $G_1$ may be written additively. The second group $G_2$ preferably is a multiplicative subgroup of a finite field, and the group law on $G_2$ may be written multiplicatively. However, other types of groups may be used as $G_1$ and $G_2$ consistent with the present invention.

The methods also use a generator $P_0$ of the first group $G_1$. In addition, a pairing or function $\hat{e} : G_1 \times G_1 \to G_2$ is provided for mapping two elements of the first group $G_1$ to one element of the second group $G_2$. The function e preferably satisfies three conditions. First, the function e preferably is bilinear, such that if $Q$ and $R$ are in $G_1$ and a and b are integers, then $e(aQ, bR) = e(Q, R)^{ab}$. Second, the function e preferably is non-degenerate, such that the map does not send all pairs in $G_1 \times G_1$ to the identity in $G_2$. Third, the function $e$ preferably is efficiently computable. A function e satisfying these three conditions is considered to be admissible.

The function e also preferably is symmetric, such that $e(Q, R) = e(R, Q)$ for all $Q, R \in G_1$. Symmetry, however, follows immediately from the bilinearity and the fact that $G_1$ is a cyclic group. Weil and Tate pairings associated with supersingular elliptic curves or abelian varieties can be modified to create such bilinear maps according to methods known in the art. However, even though reference to elements of the first cyclic group $G_1$ as "points" may suggest that the function e is a modified Weil or Tate pairing, it should be noted that any admissible pairing e will work.

The security of the signature schemes of the present invention is based primarily on the difficulty of the Diffie-Hellman Problem or the Bilinear Diffie-Hellman Problem. The Diffie-Hellman Problem is that of finding $abP$ given a randomly chosen $P \in G_1$, as well as $aP$ and $bP$ (for unknown randomly chosen $a, b, c \in Z/qZ$). The Bilinear Diffie-Hellman problem is that of finding $\hat{e}(P, P)^{abc}$ given a randomly chosen $P \in G_1$, as well as $aP, bP,$ and $cP$ (for unknown randomly chosen $a, b, c \in Z/qZ$). Solving the Diffie-Hellman problem in $G_1$ solves the Bilinear Diffie-Hellman problem because $e(P, P)^{abc} = e(abP, cP)$. Similarly, solving the Diffie-Hellman problem in $G_2$ solves the Bilinear Diffie-Hellman problem because, if g = $e(P, P)$, then $g^{abc} = (g^{ab})^c$ where $g^{ab} = e(aP, bP)$ and $g^c = e(P, cP)$. For the Bilinear Diffie-Hellman problem to be hard, $G_1$ and $G_2$ should be chosen such that there is no known algorithm for efficiently solving the Diffie-Hellman problem in either $G_1$ or $G_2$. If the Bilinear Diffie-Hellman problem is hard for a pairing $\hat{e}$, then it follows that $\hat{e}$ is non-degenerate.

A randomized algorithm *IG* is a Bilinear Diffie-Hellman generator if *IG* takes a security parameter k > 0, runs in time polynomial in *k*, and outputs the description of two groups $G_1$ and $G_2$, preferably of the same prime order q, and the description of an admissible pairing $e : G_1 \times G_1 \to G_2$. If *IG* is a Bilinear Diffie-Hellman parameter generator, the advantage $Adv_{IG}(B)$ that an algorithm *B* has in solving the Bilinear Diffie-Hellman problem is defined to be the probability that the algorithm *B* outputs $e(P, P)^{abc}$ when the inputs to the algorithm are $G_1, G_2,$ e, $P, aP, bP,$ and cP, where ($G_1, G_2, \hat{e}$) is the output of *IG* for a sufficiently large security parameter *k*, P is a random generator of $G_1$, and *a, b,* and *c* are random elements of Z/qZ. The assumption underlying the Bilinear Diffie-Hellman problem is that $Adv_{IG}(B)$ is negligible for all efficient algorithms *B*. A similar assumption underlies the Diffie-Hellman Problem.

## Multisignatures

As described above, a multisignature scheme is any scheme that allows several signers to sign a document (or documents) in a way that is somehow more efficient than if they each signed the document separately. Usually, this enhanced efficiency is in terms of signature length-*i.e.,* the combined multisignature of n signers is shorter than n separate signatures. This is convenient for transactions that require one of the parties to acquire pre-approval from multiple sources and forward this multiple pre-approval prior to the transaction. As described above, until now, there has not been a multisignature scheme that enabled multiple signers to efficiently sign multiple documents. For instance, in existing multisignature schemes, the length of the multisignature is dependent at least upon the number of signers or the number of documents signed. The present invention provides more efficient multisignature signature schemes that enable multiple signers to sign multiple documents to generate a multisignature having a length that is independent of both the number of signers and the number of documents.

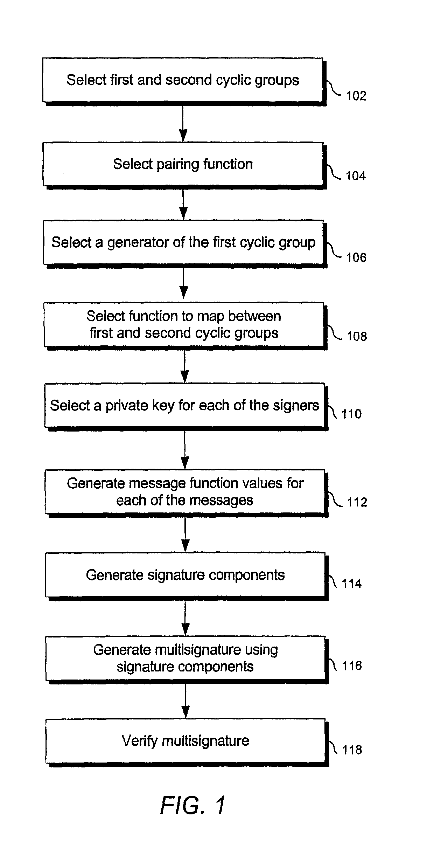

Referring now to the accompanying drawings, **FIG. 1** shows a flow diagram illustrating a method of generating and verifying a multisignature according to one presently preferred embodiment of the invention. Using bilinear mappings, such as Weil or Tate pairings, this embodiment enables multiple signers to sign multiple documents. The resulting signature may be represented as a single element of a group, such as a single point on an elliptic curve, regardless of the number of different signers or the number of different documents signed.

The multisignature scheme described with reference to **FIG. 1** allows n signers to sign $m$ digital messages and generate a single multisignature. Each signer signs a subset of the $m$ messages. Unlike previous signature schemes, the present scheme enables different signers to sign different sets of messages without sacrificing efficiency. The method begins in block **102** by generating first and second cyclic groups $G_1$ and $G_2$ of elements. In block **104,** a function e is selected, such that the function e is capable of generating an element of the second cyclic group $G_2$ from two elements of the first cyclic group $G_1$. The function e preferably is an admissible pairing, as described above. A generator P of the first cyclic group $G_1$ is selected in block **106**. In block **108,** a function $H$ is selected such that $H$ is capable of generating an element of the first cyclic group $G_1$ from a first string of binary digits. For instance, the function H may be a hash function.

In block **110,** a private key $s_i$ is selected for each of the n signers. Using the function H, message function values $P_{Mt}$ are generated for each of the m messages in block **112.** Signature components $S_{ij}$ are generated in block **114,** using the formula $S_{ij} = S_i P_{Mj}$ for all $(i,j) \in$ C-that is, for all $(ij)$ pairs such that the ith signer signed the $j$th message. These signature components $S_{ij}$ are combined to generate the digital signature $Sig = \Sigma_{(i,j) \in C} S_{ij}$, as shown in block 116. The efficiency of the signature scheme flows from the fact that the digital signature Sig comprises a single element of the first cyclic group $G_1$. This signature is verified in block **118** by confirming that $e(P,Sig) = \Pi_{(i,j) \in C} e(s_i P, P_{Mj})$.

Although the scheme above, in which every signer signs every message, is a useful type of multisignature, there are other variations. For instance, not all of the messages need be signed by all of the signers. In addition, the various signatures and authorizations that the party has obtained can be matched in different combinations in future transactions. If several signers sign the same message or one signer signs multiple messages, multisignature verification efficiency is improved because fewer pairing computations need to be made. This scheme can be made even more bandwidth efficient by sending only the x coordinate of the signature *Sig,* from which the verifier can recover the y coordinate, according to methods known in the art.

Additional security measures may be useful to prevent a particular type of attack on the multisignature scheme described with reference to **FIG. 1.** In such an attack, the attacker modifies its public key / private key pair depending on some other party's public key so that the attacker can forge, without the other party's participation, a single-message multisignature with itself and the other party as the putative signers. This type of attack may be prevented in a number of ways. For instance, a single party may collect the signature components from each of the signers to form the multisignature. In doing so, this party may independently verify each signer's signature component $S_{ij}$ by confirming that $e(P,S_{ij}) = e(s_i P, P_{Mj})$. The ultimate verifier of the multisignature, however, may not be reassured by this approach because the verifier still has to trust that the party that collected the signature components verified those signature components correctly.

Alternatively, the attack can be thwarted by requiring each signer to individually sign some message that is unique to the signer, such as, for instance, a message that contains the signer's identity information or public key, or a message that is randomly chosen for each signer. For example, $P_{Mij}$ may be set to $H(S_i P, M_j)$. Or, the CA may require the signer to sign some "challenge" message chosen by the CA before it issues a certificate to the signer. (In fact, CAs often require this already.) In either case, the verifier is able to independently verify the multisignature without any reassurance from the party that collected the signature components. Those skilled in the art will appreciate that other methods also may be used to thwart the attack.

### Identity-Based Ring Signatures

Ring signatures enable a member of a group (not necessarily established a *priori*) to sign a message such that a third party can verify that some member of the group created the signature but cannot determine which member. For example, consider a cabinet member who wants to leak a secret to the press, but wants to maintain limited anonymity-i.e., he wants the press to know that he is a cabinet member, but not which member. Ring signatures allow a signer to choose any set containing the signer, and to prove that the signer is a member of that set without disclosing which member. Thus, a cabinet member may use his private key in combination with the public keys of the other cabinet members to create a ring signature for the cabinet. Because the cabinet-specific ring signature could only be created by a cabinet member, the press can use this signature to prove the authenticity of its anonymous source.

Ring signatures also may be useful in contract negotiations. When party A sends a draft contract to party B, party A may wish to provide authentication but not nonrepudiation-*i.e.*, it may want to prove to party B that the draft contract came from party A, but it may not want to give party B the ability to prove to a third party (*i.e.,* a court) that party A signed the draft. In this situation, party A can create a ring signature for the set {*A, B*}. Party B will know that party A created the signature because party B did not create the signature itself. On the other hand, party B will not be able to convince third parties that party A created the signature because, from the perspective of third parties, party B also could have created the signature.

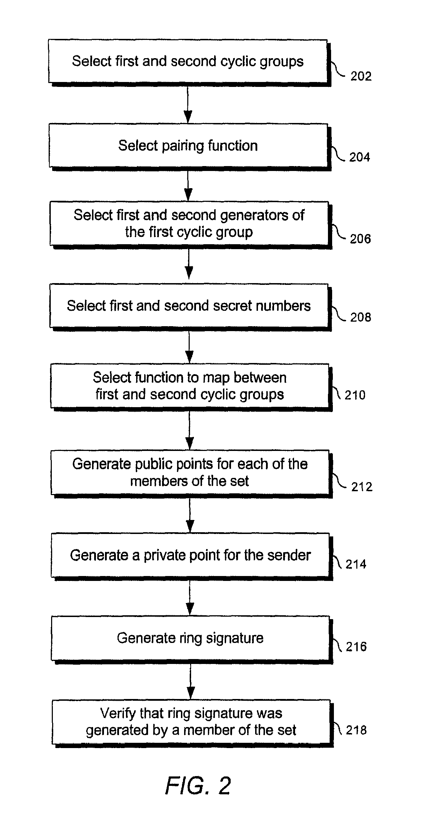

An identity-based ring signature scheme will now be discussed with reference to **FIG. 2,** which shows a flow diagram illustrating a method of generating and verifying a digital signature *Sig* of a message *M* communicated between a signer and a verifier according to another presently preferred embodiment of the invention. The signer in this case is one of *t* members of a set. For purposes of following description, the signer is associated with identity $ID_1$, and the other members of the set are associated with identities $ID_i$ for $2 \le i \le t$. Note, however, that if the anonymous signer always were associated with the first listed identity, the signature would not actually be anonymous.

The method begins in block **202** by generating first and second cyclic groups $G_1$ and $G_2$ of elements. In block **204,** a function e is selected, such that the function e is capable of generating an element of the second cyclic group $G_2$ from two elements of the first cyclic group $G_1$. The function e preferably is an admissible pairing, as described above. First and second generators, P and *P',* of the first group $G_1$ are selected in block **206.** In block **208,** first and second secret numbers *s* and *s'* are selected. Optionally, a new *s'* may be chosen for each new signature. A function *H* is selected in block 210 such that the function His capable of generating an element of the first cyclic group $G_1$ from a first string of binary digits. In block **212,** a public point $P_i = H_1 (ID_i)$ is generated for each of the *t* members of the set. A private point $sP' + s'P_1$ is generated for the signer in block **214.**

The digital message *M* is signed in block **216** by generating the digital signature *Sig* using at least the signer's private point $(sP' + s'P_1)$ and the public point $P_i$ of each of the *t* members of the set. For instance, the digital signature may be generated in the following manner. Random numbers $r_M$ and $r_i$ for $1 \le i \le t$ are selected, and a message function value $P_M = H_2 (M)$ is generated. The digital signature itself is then generated using Sig = [*U, $V_1$,..., $V_t$, $V_M$*], wherein

$$ U = sP' + s'P_1 + r_1P_1 + r_2P_2 + \cdots + r_tP_t + r_MP_M, \; V_1 = s'P + r_1P, \; V_M = r_MP, $$

and $V_t = r_iP$ for $2 \le i \le n$.

In block **218,** using at least the public point $P_i$ of each of the *t* members of the set, the digital signature *Sig* is verified to have been generated by a member of the set. For instance, the signature may be verified by confirming that $e(U,P) = e(P', sP)e(P_M, V_M)\Pi'_{l=1} e(P_i, V_l)$.

The following is an example of an identity-based ring signature for two entities having identities $ID_1$ and $ID_2$ according to the method described above. The private key provided by the PKG for the first entity may be represented as $(sP' + r_1P_1, r_1P)$, and the private key provided by the PKG for the second entity may be represented as $(sP' + r_2P_2, r_2P)$. The first part of the first point in each of the private keys is *sP',* which ties each of the entities to the PKG. This portion of each private key must remain constant. The remainder of each private key may be changed, however. For instance, an equally valid private point for the first entity is $(sP' + r'_1 P_1, r'_1 P)$ for any $r'_1$. This flexibility is exploited to enable the creation of a ring signature. A ring signature for these two entities has the form $(sP' + r'_1 P_1 + r'_2 P_2, r'_1P, r'_2P)$ for some $r'_1$ and $r'_2$. The identities of both entities are embedded in this ring signature by the use of their public points $P_1$ and $P_2$. Moreover, either client can produce such a ring signature.

For instance, the first entity may produce a ring signature for both entities as follows. For convenience, let the first entity's private key be represented as $(S_1, R_1)$. The first entity chooses random numbers b and $r'_2$, and computes the ring signature $(S_1 + bP_1 + r'_2 P_2, R, + bP, r'_2P)$, where $r'_1 = r_1 + b$ for some random *b*. This is a valid ring signature for the first and second entities. Note that if the first entity always chooses b = 0, then it would be obvious that the first entity created each signature. Using a random *b* makes it impossible to determine which of the two entities created the ring signature. Similarly, the second entity may choose random numbers b and $r'_1$, and compute the ring signature $(S_2 + r'_1 P_1 + bP_2, r'_2P, R_2 + bP)$.

A third entity having identity $ID_3$, however, may not create a valid ring signature for the first two entities. The private key provided by the PKG to the third entity may be represented as $(sP' + r_3P_3, r_3P)$. Because the third entity cannot remove its public point $P_3$ from its private key, the third entity's private key is "tainted" by its identity. This taint cannot be removed, and thus the third entity cannot forge a valid ring signature for the first two entities. Only the first two entities may create such a ring signature, essentially by adding the other entity's identity to the signing entity's private key.

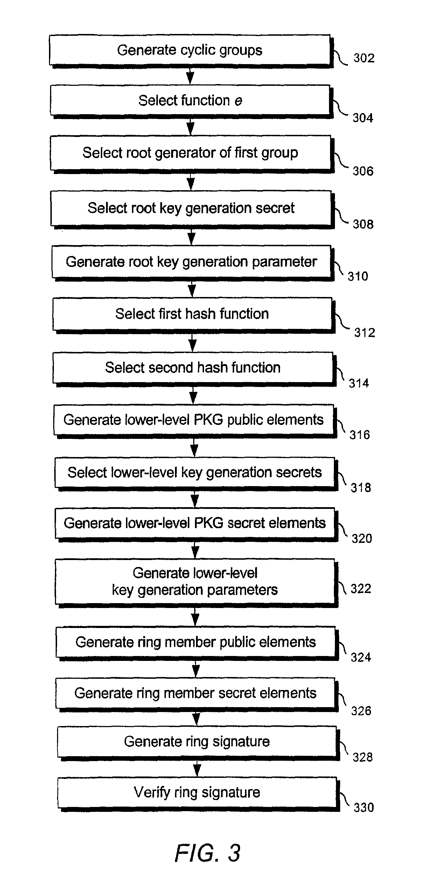

The ring signature scheme described above also may be modified to create a hierarchical ring signature scheme. A hierarchical identity-based ring signature scheme will now be discussed with reference to **FIG. 3,** which shows a flow diagram illustrating a method of generating and verifying a ring signature *Sig* of a message *M* communicated between a signer and a verifier in a hierarchy according to another presently preferred embodiment of the invention.

The method enables a signer from a ring of $t$ ring members in a hierarchy to generate a ring signature for the $t$ ring members. Each of the $t$ entities is associated with an ID-tuple such as $(ID_{l1},..., ID_{ilt})$, where $l_i$ represents the level of the respective entity in the hierarchy. The method begins in block **302** by generating first and second cyclic groups $G_1$ and $G_2$ of elements. In block **304,** a function e is selected, such that the function e is capable of generating an element of the second cyclic group $G_2$ from two elements of the first cyclic group $G_1$. The function e preferably is an admissible pairing, as described above. A root generator $P_0$ of the first cyclic group $G_1$ is selected in block **306.** In block **308,** a random root key generation secret $s_0$ associated with and known only to the root PKG is selected. Preferably, $s_0$ is an element of the cyclic group Z/qZ. A root key generation parameter $Q_0 = s_0 P_0$ is generated in block **310.** Preferably, $Q_0$ is an element of the first cyclic group $G_1$. In block **312,** a first function $H_1$ is selected such that $H_1$ is capable of generating an element of the first cyclic group $G_1$ from a first string of binary digits. A second function $H_2$ is selected in block **314,** such that $H_2$ also is capable of generating an element of the first cyclic group $G_1$ from a first string of binary digits. The functions of blocks **302** through **314** are part of the Root Setup algorithm described above, and preferably are performed at about the same time. By way of example, functions such as those disclosed in Boneh-Franklin may be used as $H_1$ and $H_2$.

The next series of blocks (blocks **316** through **324**) show the functions performed as part of Lower-level Setup algorithm. In block **316,** a public element $P_{il}$ is generated for each of the $l_i$ - 1 ancestral lower-level PKGs associated with each of the $t$ ring members. Each of the public elements, $P_{il} = H(ID_{il},...,ID_{il})$ for $1 \leq i \leq t$ and $1 \leq l \leq (l_i$ - 1), preferably is an element of the first cyclic group $G_1$. Although represented in a single block, generation of all the public elements $P_{il}$ may take place over time, rather than all at once.

A lower-level key generation secret $s_{il}$ for $1 \leq i \leq t$ and $1 \leq l \leq (l_i$ -1) is selected (block **318**) for each of the $l_i$ -1 ancestral lower-level PKGs associated with each of the $t$ ring members. The lower-level key generation secrets $s_{il}$ preferably are elements of the cyclic group Z/qZ, and each lower-level key generation secret $s_{il}$ preferably is known only to its associated lower-level PKG. Again, although represented in a single block, selection of the lower-level key generation secrets $s_{il}$ may take place over time, rather than all at once.

A lower-level secret point $S_{il}$ is generated (block **320**) for each of the $l_i$ - 1 ancestral lower-level PKGs associated with each of the $t$ ring members. Each lower-level secret element, $S_{il} = S_{i(l-1)} + S_{i(l-1)}P_{il}$ for $1 \leq i \leq t$ and $1 \leq l \leq (l_i$ -1), preferably is an element of the first cyclic group $G_1$. Although represented in a single block like the public elements $P_{il}$ and the secrets $s_{il}$, generation of the secret elements $S_{il}$ may take place over time, rather than all at once. For purposes of these iterative key generation processes, $S_0$ may be defined to be the identity element of $G_1$.

A lower-level key generation parameter $Q_{il}$ also is generated (block **322**) for each of the $l_1$ - 1 ancestral lower-level PKGs associated with each of the $t$ ring members. Each of the key generation parameters, $Q_{il} = S_{il}P_0$ for $1 \leq i \leq t$ and $1 \leq l \leq (l_t$ -1), preferably is an element of the first cyclic group $G_1$. Again, although represented in a single block, generation of all the key generation parameters $Q_{il}$ may take place over time, rather than all at once.

The functions of the next two blocks (blocks **324** and **326**) are performed as part of the Extraction algorithm described above. A ring member public point $P_{il1}$ associated with each of the $t$ ring members is generated in block **324.** Each ring member public point, $P_{il1} = H_1 (ID_{il1},...ID_{il1})$ for $1 \leq i \leq t,$ preferably is an element of the first cyclic group $G_1$. A ring member secret point $S_{ili}$ associated with each of the $t$ ring members is then generated in block **326.** Each ring member secret point, $S_{il_t} = S_{i(l_t-1)} + S_{i(l_t-1)}P_{il_t} = \sum_{l=1}^{l_t} s_{i(l-1)}P_{il}$ for $1 \leq i \leq t,$ also preferably is an element of the first cyclic group $G_1$.

For convenience, the first function $H_1$ optionally may be chosen to be an iterated function so that, for example, the public points $P_{il}$ may be computed as $H_1(P_{l(l-1)}, ID_{il})$ rather than $H_1(ID_{i1},...ID_{il})$.

The last two blocks shown in **FIG. 3** (blocks **328** and **330**) represent the Signature and Verification algorithms described above. In block **328,** the message $M$ is signed by a signer having the ID-tuple $(ID_{j1},..., ID_{jlj})$ to generate a ring signature Sig. The Signature algorithm preferably uses at least the signer's private point $S_{jl_j}$ and the ID-tuples $(ID_{i1},..., ID_{ilj})$ for each of the $t$ ring members. The ring Signature $Sig$ is then verified in block 330 to confirm that it was signed by one of the $t$ ring members. The verification preferably uses at least the ID-tuples $(ID_{i1},...,ID_{ilj})$ for each of the $t$ ring members. These ID-tuples correspond to public point-tuples

$$ P_{ik} = H(ID_{i1},...,ID_{ik}). $$

For instance, the Signature algorithm may begin by eliminating the redundancy among the public point-tuples $P_{ik}$ of the $t$ ring members. There will be redundancy among these point-tuples if any of the ring members share common ancestral PKGs. The non-redundant set of public points from the $t$ public point-tuples may be represented by the set of points $R = \{R_1,..., R_x\}$. The signer then generates the ring signature in the form $[U, V_1,..., V_x, V_M]$, where $U = sP'+r_1R_1 +\cdots+r_xR_x + r_MP_M$ , $V_k = r_kP$ for $1 \leq k \leq x$, and $V_M= r_MP$. To preserve its anonymity among the ring members, the signer

chooses $r_k$ randomly for points $R_k$ that are not in its ID-tuple, and it "obscures" the scalar for points $R_k$ that are in its ID-tuple, using the method described above. This signature may be verified to confirm that the signer is a one of the $t$ ring members by confirming that

$$e(U,P) = e(P',sP)e(P_M,V_M)\prod_{k=1}^{z}e(R_k,V_k).$$

## Hierarchical Identity-Based Proxy Signatures

Proxy signatures allow a designated person or group of persons, called proxy signers, to sign on behalf of the original signer. A proxy signature scheme should have the following properties:

Strong unforgeability: The proxy signer can create valid proxy signatures for the original signer. Any other third party, including the original signer, is unable to forge a proxy signature.
Strong identifiability: Anyone can identify the proxy signer from a proxy signature.
Strong undeniability: The proxy signer cannot repudiate the creation of a valid signature.

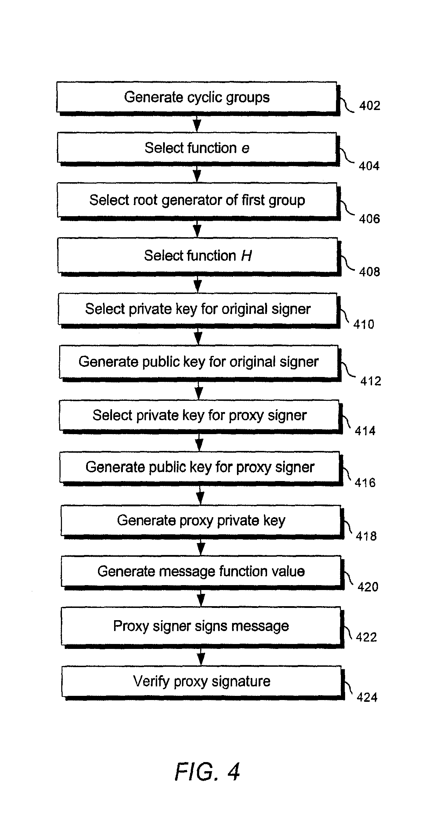

The present invention provides hierarchical identity-based proxy signature schemes. **FIG. 4** shows a flow diagram illustrating a method of generating and verifying a digital proxy signature $Sig$ of a digital message $M$ according to another embodiment of the present invention. The signature $Sig$ is signed by a proxy signer on behalf of an original signer. The method begins in block **402** by generating first and second cyclic groups $G_1$ and $G_2$ of elements. In block **404,** a function e is selected, such that the function e is capable of generating an element of the second cyclic group $G_2$ from two elements of the first cyclic group $G_1$. The function e preferably is an admissible pairing, as described above. A generator P of the first group $G_1$ is selected in block **406.** A function H is selected in block **408** such that the function H is capable of generating an element of the first group $G_1$ from a string of binary digits. In block **410,** a private key $S_{or}$ is selected for the original signer. A public key $_{Sor}P$ is generated for the original signer in block **412.** Similarly, in block **414,** a private key $_{Spr}$ is selected for the proxy signer, and a public key $_{Spr}P$ is generated for the proxy signer in block **416.** The original signer gives the proxy signer a proxy private key $_{Sor}P_{pr}$ in block **418,** wherein $P_{pr} = H(_{Spr}P)$. To sign a message on behalf of the original signer, the proxy signer first generates a message function value $P_M = H(M)$ in block **420.** Alternatively, other information in addition to the message $M$ may be used to generate the message function value $P_M$. As will be understood in the art, inputs to the function H, as well as the function itself, may be adjusted in various ways. For instance, the original signer may limit the scope of the proxy signer's authority by including a "contract" C inside the function, such that $P_{pr} = H(_{Spr}P, C)$. The proxy signer then signs the digital message Min block 422 by generating the digital signature $Sig = s_{or}P_{pr} + s_{pr}P_M$. To verify that the proxy's signature represents the signature of the original signer, the verifier confirms that $e(Sig,P) = e(P_{pr,Sor}P)e(P_{M,Spr}P)$ in step **424.**

## Hierarchical Identity-Based Online/Offline Signatures

For many applications, the total time required to sign a message is not as important as the online signing time. The online signing time generally is considered to be the time the signer needs to generate a signature after obtaining the message. Online/offline signature schemes have been proposed to reduce the time required for online signing. For instance, one such scheme employs a "trapdoor hash function" h and the "hash sign switch" paradigm. However, online/offline signature schemes have not been available for hierarchical identity-based signature systems.

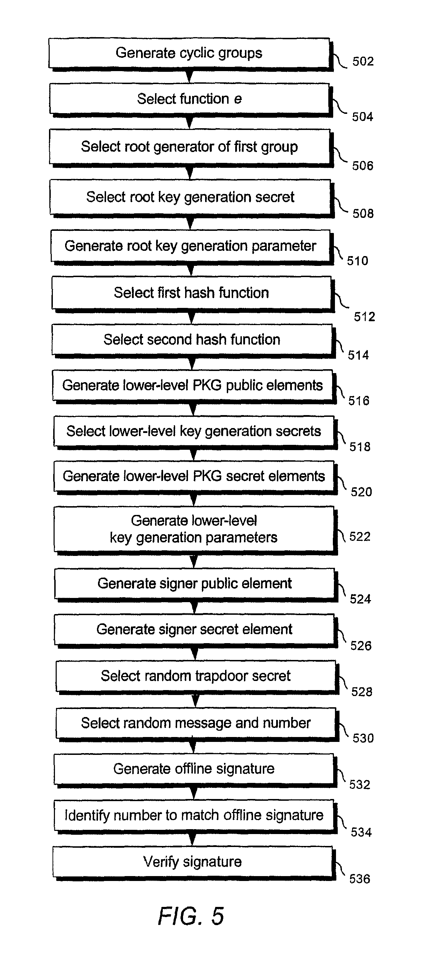

The present invention provides online/offline hierarchical identity-based signature schemes. **FIG. 5** shows a flow diagram illustrating a method of generating and verifying a digital signature $Sig$ of a digital message $M$ according to another embodiment of the present invention. This method includes a two-stage signature process in the context of a hierarchical identity-based system. The first stage of the signature process may be completed offline. This leaves only the second stage of the signature process to be completed online, thereby reducing the online signing time.

The signer $y$ in this hierarchical scheme is $t$ levels below the root PKG in the hierarchy and is associated with the ID-tuple $(ID_{y1}, ... , ID_{yt})$. The signer's ID-tuple includes identity information $ID_{yt}$ associated with the signer, as well as identity information $ID_{yi}$ associated with each of its $t$-1 ancestral lower-level PKGs in the hierarchy. The method begins in block **502** by generating first and second cyclic groups $G_1$ and $C_2$ of elements. In block **504,** a function e is selected, such that the function e is capable of generating an element of the second cyclic group $G_2$ from two elements of the first cyclic group $G_1$. The function e preferably is an admissible pairing, as described above. A root generator $P_0$ of the first cyclic group $G_1$ is selected in block **506.** In block **508,** a random root key generation secret $s_0$ associated with and known only to the root PKG is selected. Preferably, $s_0$ is an element of the cyclic group Z/qZ. A root key generation parameter $Q_0 = s_0P_0$ is generated in block **510.** Preferably, $Q_0$ is an element of the first cyclic group $G_1$. In block **512,** a first function

$H_1$ is selected such that $H_1$ is capable of generating an element of the first cyclic group $G_1$ from a first string of binary digits. A second function $H_2$ is selected in block **514,** such that $H_2$ also is capable of generating an element of the first cyclic group $G_1$ from a first string of binary digits. By way of example, functions such as those disclosed in Boneh-Franklin may be used as $H_1$ and $H_2$. In fact, the functions $H_1$ and $H_2$ may be exactly the same function. However, there is a potential pitfall. An attacker may try to get the signer to sign $M = ID_t$, wherein $ID_t$ represents an actual identity. In this case, the signer's signature may actually be a private key, which thereafter may be used to decrypt messages and forge signatures. This pitfall may be avoided, however, by using some expedient-such as a bit prefix or a different function for $H_2$-that distinguishes between signing and private key extraction. The functions of blocks **502** through **514** are part of the Root Setup algorithm described above, and preferably are performed at about the same time.

The next series of blocks (blocks **516** through **524)** show the functions performed as part of the Lower-level Setup algorithm. In block **516,** a public element $P_{yi}$ is generated for each of the signer's t-1 ancestral lower-level PKGs. Each of the public elements, $P_{yl} = H(ID_{yl},...,ID_{yl})$ for $1 \leq i \leq t\text{-}1,$ preferably is an element of the first cyclic group $G_1$. Although represented in a single block, generation of all the public elements $P_{yi}$ may take place over time, rather than all at once.

A lower-level key generation secret $S_{yi}$ is selected (block **518**) for each of the signer's $t$-1 ancestral lower-level PKGs. The lower-level key generation secrets $S_{yi}$ preferably are elements of the cyclic group $Z/qZ$ for $1 \leq i \leq t$-1, and each lower-level key generation secret $S_{yi}$ preferably is known only to its associated lower-level PKG. Again, although represented in a single block, selection of the secrets $S_{yi}$ may take place over time, rather than all at once.

A lower-level secret element $S_{yi}$ is generated (block **520**) for each of the signer's m ancestral lower-level PKGs. Each lower-level secret element, $S_{yi} = S_{y(i-1)} + S_{y(i-1)}P_{yi}$ for $1 \leq i \leq t$-1, preferably is an element of the first cyclic group $G_1$. Although represented in a single block like the public elements $P_{yi}$ and the secrets $S_{yi}$, generation of the secret elements $S_{yi}$ may take place over time, rather than all at once. For purposes of these iterative key generation processes, $S_0$ preferably is defined to be the identity element of $G_1$.

A lower-level key generation parameter $Q_{yi}$ also is generated (block **422**) for each of the signer's $t$-1 ancestral lower-level PKGs. Each of the key generation parameters, $Q_{yi} = S_{yi}P_0$ for $1 \leq i \leq t$-1, preferably is an element of the first cyclic group $G_1$. Again, although represented in a single block, generation of the key generation parameters $Q_{yi}$ may take place over time, rather than all at once.

The functions of the next two blocks (blocks **524** and **526)** are performed as part of the Extraction algorithm described above. A signer public element $P_{yt}$ associated with the signer $y$ is generated in block **524.** The signer public element, $P_{yt} = H_1(ID_{y1},..., ID_{yt})$, preferably is an element of the first cyclic group $G_1$. A signer secret element $S_{yt}$ associated with the signer $y$ is then generated in block **526**. The signer secret element $S_{yl} = S_{y(l-1)} + S_{y(t-1)}P_{yl} = \Sigma^t_{i=1}S_{y(l-1)}P_{yt}$, also preferably is an element of the first cyclic group $G_1$.

For convenience, the first function $H_1$ optionally may be chosen to be an iterated function so that, for example, the public points $P_i$ may be computed as $H_1(P_{y(i-1)}, ID_{yi})$ rather than $H_1 (ID_1, ... , ID_{yi})$.

The last two blocks shown in **FIG. 5** (blocks **528** and **530)** represent the Signing and Verification algorithms described above. The two-stage signing algorithm involves the use of a trapdoor hash function h, which preferably is a discrete-log-based trapdoor hash function modified, according to methods known in the art, to apply to elliptic curves. Accordingly, in block **528**, a random trapdoor secret $s'_{yt} \in Z/qZ$ is selected. During the signing process, the signer can give $Q'_{yt} = s'_{yt} P_0$ to the verifier as its public hash key. For example, the signer could choose $s'_{yt}$ to be equal to $s_{yt}$, the signer's lower-level secret element. In any event, s'$_{yt}$ preferably should be generated anew for each signature.

The Signing algorithm continues in block **530**, as the signer selects a random message $M'$ and a random number r'. The signer then signs the random message $M'$ in block **532** to generate the signature $[U, Q_{y1},..., Q_{yt}, Q'_{yt}]$, where $U = (\Sigma^t_{l=1}S_{y(l-1)}P_{yl}) + S_{yt}P_{M'}$, $Q_{yt} = S_{yi}P_0$ for $1 \leq i \leq t$, and $P_{M'} = H_2 ((M'+ r's'_{yl})P_0)$. This portion of the Signing algorithm may be completed offline.

After the signer has identified the message Mto be signed, the online portion of the Signing algorithm may be completed. In block 534, the signer determines a number r such that $M+rs'_{yt} = M'+r's'_{yt} \Leftrightarrow r = (s'_{yt})^{-1}(M' - M) + r'$, where the inverse of $s'_{yt}$ is taken modulo $q$. The signer may then send r to the verifier along with the message $M$ and the signature $Sig$.

In step 536, The verifier may then complete the Verification algorithm and verify the signature by confirming that $e(U,P_0)= e(Q_{yt},P_M)\Pi_{i=1}e(Q_{y(i-1)},P_{yl})$, where $P_M = H_2\left(MP_0 + rQ'_{yt}\right) = P'_M$. The Verification algorithm also may be broken down into online and offline stages, depending on what information the verifier has In its possession. For instance, the signer may provide the verifier with various information in advance of knowing the message $M$. In this way, the verifier may learn any or all of the following: (1) the signer's $Q_{yi}$ values; (2) $P_{M'}$, the most recent output of the signer's trapdoor hash function $H_2$; (3) $U,$ the signer's partial signature on the hash function output; (4) $M,$ the message to be signed; and/or (5) the signer's complete signature, including the value $r$. Using this information, the verifier may begin to verify parts of the signature, even before the message $M$ is known or signed. For example, the verifier will know the signer's $Q_{yi}$ values if the verifier has received a previous signature from that signer. This allows the verifier to precompute all but two pairings necessary to verify the signer's signature, regardless of how deep the signer is in the hierarchy. The verifier may complete the final two pairing computations after it receives $P_M$, and $U$, the signer's signature on $P_{M'}$. The signer's complete signature may be verified using point addition-the verifier computes $P_M = MP_0 + rQ'_{yi}$ and confirms that this value is the same as $P_{M'}$. This is the only step of verification that must be completed online, because it is the only step that depends on the message $M$. No pairings need to be computed. Thus, the online component of verification is quite efficient.

**Systems For Use With Signatures Schemes**

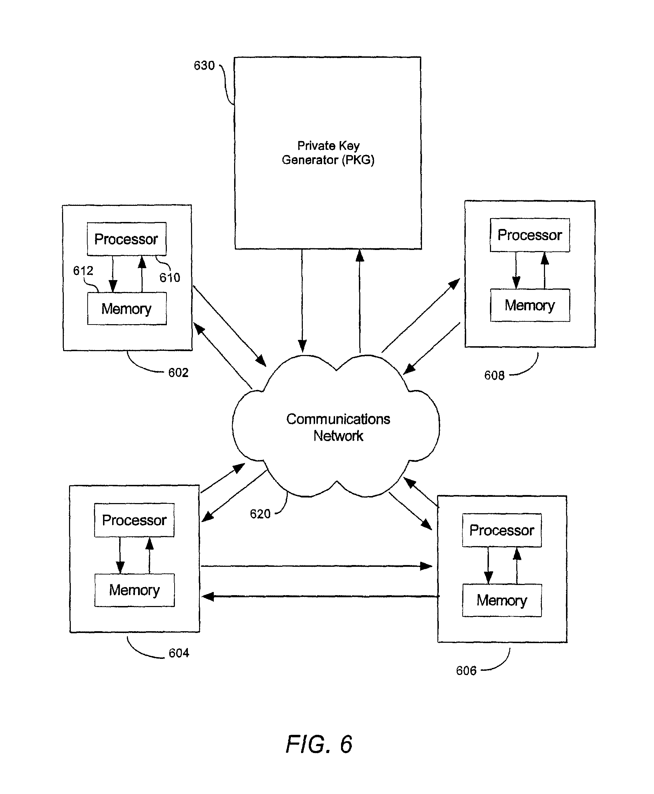

Various signature schemes involving bilinear mappings according to the present invention have been described. A system for implementing these schemes according to another embodiment of the present invention will now be described with reference to **FIG. 6.** The system includes a number of terminals **602, 604, 606, 608,** each of which may be associated with an entity that generates or verifies signatures according to the signature schemes described above. The system also includes one or more private key generators (PKG) 630 that generate and distribute private keys to the various terminals **602, 604, 606,** and **608.**

Each terminal includes a processor **610** in bidirectional communication with a memory **612.** The processor **610** executes suitable program code for carrying out the procedures described above to generate or verify a digital signature. The processor **610** also executes suitable program code for generating information to be transmitted to other terminals. Suitable program code may be created according to methods known in the art. The memory **612** stores the program code, as well as intermediate results and other information used during execution of the digital signature generation and verification procedures.

A communications network **620** is provided over which the entities **602, 604, 606,** and **608** and a PKG **630** may communicate. The communications network **620** may be of various common forms, including, for instance, a LAN computer network, a WAN computer network, and/or a mobile telephone network provide suitable communication networks.

The invention has been described in detail with particular reference to preferred embodiments thereof and illustrative examples, but it will be understood that variations and modifications can be effected within the spirit and scope of the invention.

INDUSTRIAL APPLICABILITY

The methods and systems described above are generally applicable to cryptography and secure communication via computer networks or via other types of systems and devices. The methods and systems are particularly useful as schemes for generating and verifying signatures of communications in systems using public key cryptography.

Thus, there has been disclosed in accordance with the invention methods and systems that fully provide the advantages set forth above. Although the invention has been described and illustrated with reference to specific illustrative embodiments thereof, it is not intended that the invention be limited to those illustrative embodiments. Those skilled in the art will recognize that variations and modifications can be made without departing from the spirit of the invention. It is therefore intended to include within the invention all such variations and modifications that fall within the scope of the appended claims and equivalents thereof.

**Claims**

1.  A method of generating and verifying a ring signature of a digital message communicated between a signer and a verifier, wherein the signer is one of a plurality of $t$ members of a ring, and wherein each member of the ring is associated with identity information, the method comprising:

    selecting a private key for each of the $t$ members of the ring, wherein each of the private keys is related to the identity information associated with the respective ring member;
    computing a public key for each of the $t$ members of the ring set using the respective member's private key, wherein each of the public keys is related to the identity information associated with the respective ring member;
    generating a message function value using a predetermined function;
    generating the ring signature using at least the signer's private key, the public key of each of the ($t$-1) ring members other than the signer, and the message function values; and

verifying that the ring signature was generated by a member of the ring, using at least the public keys associated with each of the ring members.

**2.** A method of generating and verifying a ring signature *Sig* of a digital message *M* communicated between a signer and a verifier using the method of claim 1, wherein the signer is one of a plurality of *t* members of a set, wherein each of the members of the set is associated with an identity from the identity set $\{ID_1, ..., ID_t\}$, wherein the signer is associated with the identity $ID_s$, and wherein $1 \leq s \leq t$, the method further comprising:

generating a first cyclic group $G_1$ of elements and a second cyclic group $G_2$ of elements;
selecting a bilinear, non-degenerate pairing e capable of generating an element of the second cyclic group $G_2$ from two elements of the first cyclic group $G_1$;
selecting a first generator P of the first cyclic group $G_1$ and a second generator P' of the first cyclic group $G_1$;
selecting a first secret number s;
selecting a second secret number *s';*
selecting a function H capable of generating an element of the first cyclic group $G_1$ from a first string of binary digits;
generating a public point $Q_i$ for each of the *t* members of the set using the function H and the identity $ID_i$ associated with the set member;
generating a private point $sP' + s'Q_s$ for the signer;
generating a message function value $P_M$ for the message *M* using a predetermined function;
generating the ring signature *Sig* using at least the signer's private point $sP' + s'Q_1$, the public point $Q_i$ of each of the *t* members of the set, and the message function value $P_M$; and
verifying that the ring signature *Sig* was generated by a member of the set using at least the public point $Q_i$ of each of the *t* members of the set.

**3.** A method of generating and verifying a ring signature Sig as in claim 2, wherein:

the public points $Q_i$ are generated using $Q_i=H(ID_i)$.

**4.** A method of generating and verifying a ring signature *Sig* as in claim 2, wherein:

the public points $Q_i$ are generated using the identity $ID_i$ associated with the respective set member, the function H, and one or more other function inputs.

**5.** A method of generating and verifying a ring signature *Sig* as in claim 2, wherein:

a new second secret number *s'* is selected for the generation of each new private point.

**6.** A method of generating and verifying a ring signature *Sig* as in claim 2, wherein:

generating the digital ring signature *Sig* further includes:

selecting random numbers $r_M$ and $r_i$ for $1 \leq i \leq t$; and
computing the ring signature $Sig=[U, V_1, ... V_t, V_M]$, *where*in $U=sP'+s'Q_s+r_1Q_1+r_2Q_2+...+r_tQ_t+r_MP_M$, and $V_s=s'P+r_sP$, $V_M=r_MP$, and $V_i=r_iP$ for $1 \leq i \leq n$, $i \neq$ s; and

verifying that the ring signature *Sig* was generated by a member of the ring further includes:

confirming that $e(U, P) = e(P', sP)e(P_M, V_M)\Pi^t_{i=1}e(Q_i, V_i)$.

**7.** A method of generating and verifying a ring signature *Sig* for a ring of *t* ring members, wherein each of the ring members is $l_i$ levels below a root PKG in a hierarchical system, and wherein each ring member is associated with a ring member ID-tuple $(ID_{il},...,ID_{ili})$ that includes identity information $ID_{ili}$ associated with the recipient and identity information $ID_{il}$ associated with each of $(l_i-1)$ lower-level PKGs in the hierarchy between the root PKG and the recipient, the method comprising:

generating a first cyclic group $G_1$ of elements and a second cyclic group $G_2$ of elements;
selecting a function e capable of generating an element of the second cyclic group $G_2$ from two elements of the first cyclic group $G_1$;

selecting a root generator $P_0$ of the first cyclic group $G_1$;

selecting a random root key generation secret $S_0$ associated with and known only to the root PKG;

generating a root key generation parameter $Q_0 = S_0 P_0$;

selecting a first function $H_1$ capable of generating an element of the first cyclic group $G_1$ from a first string of binary digits;

selecting a second function $H_2$ capable of generating a second string of binary digits from an element of the second cyclic group $G_2$;

generating a public element $P_{il}$ for each of the $l_i$-1 ancestral lower-level PKGs associated with each of the $t$ ring members, wherein $P_{il} = H_1 (ID_{i1},..., ID_{il})$ for $1 \leq i \leq t$ and $1 \leq l \leq (l_i$-1);

selecting a lower-level key generation secret $S_{il}$ for each of the $l_i$-1 ancestral lower-level PKGs associated with each of the $t$ ring members, wherein $1 \leq i \leq t$ and $1 \leq l \leq (l_i$ -1);

generating a lower-level secret element $S_{il}$ for each of the $l_i$-1 ancestral lower-level PKGs associated with each of the $t$ ring members, wherein $S_{il} = S_{i(l-1)} + S_{i(l-1)}P_{il}$ for $1 \leq i \leq t$ and $1 \leq l \leq (l_i$ -1), wherein $s_{i0} = s_0$, and wherein $S_{i0}$ is defined to be zero;

generating a lower-level key generation parameter $Q_{il}$ for each of the $l_i$-1 ancestral lower-level PKGs associated with each of the $t$ ring members, wherein $Q_{il}=S_{il}P_0$ for $1 \leq i \leq t$ and $1 \leq l \leq (l_i$ -1);

generating a ring member public element $P_{ili}$ for each of the $t$ ring members, wherein $P_{ili} = H_1 (ID_{i1},..., ID_{ili})$ for $1 \leq i \leq t$;

generating a recipient secret element $S_{il}$ for each of the $t$ ring members, wherein $S_{ili} = S_{i(li-1)} + S_{i(li-1)}P_{ili} = \Sigma^{li}_{l=1} S_{i(l-1)}P_{il}$ for $1 \leq i \leq t$;

signing the message $M$ to generate the ring signature $Sig$ using at least the signer's private point $S_{jlj}$ and the ID-tuples $(ID_{i1},..., ID_{ili})$ for each of the $(t$-1) ring members other than the signer; and

verifying the ring signature $Sig$ to confirm that the signature was generated by one of the ring members, using at least the ID-tuples $(ID_{il},..., ID_{ili})$ for each of the $t$ ring members.

8. A method of generating and verifying a ring signature $Sig$ as in claim 7, wherein:

signing the message $M$ further comprises:

determining public point-tuples $P_{ik}=H(ID_{il},...,ID_{ik})$ for each of the $t$ ring members;

determining a set $R = \{R_1, ... , R_x\}$ of non-redundant public points from the set of $t$ public point-tuples; and

generating the ring signature [U, $V_1$, ... , $V_x$, $V_M$], wherein $U = sP'+r_1 R_1 + ... + r_x R_x + r_M P_M$, $V_k = r_k P$ for $1 \leq k \leq x$, and $V_M = r_M P;$ and

verifying the ring signature further comprises:

confirming that $e(U, P) = e(P', sP)e(P_M, V_M)\Pi^{x}_{k=1} e(R_k, V_k)$.

9. A method as in claim 2, wherein:

both the first group $G_1$ and the second group $G_2$ are of the same prime order q.

10. A method as in claim 2, wherein:

the first cyclic group $G_1$ is an additive group of points on a supersingular elliptic curve or abelian variety, and the second cyclic group $G_2$ is a multiplicative subgroup of a finite field.

11. A method as in claim 2, wherein:

the function e is an admissible pairing.

12. A system for generating a ring signature of a digital message communicated between a signer and a verifier, wherein the signer is one of a plurality of $t$ members of a ring, and wherein each member of the ring is associated with identity information, comprising:

a memory operable to store at least a private key associated with the signer, and a plurality of public keys associated with the ring members, wherein the private key associated with the signer is related to the signer's identity information, and wherein the public key associated with each ring member is related to the respective ring member's identity information; and

a processor in communication with the memory, wherein the processor is operable to generate a message function value using a predetermined function, and to generate the ring signature using at least the message function value, the private key associated with the signer, and the public keys associated with the ring members.

13. A method of generating an identity-based ring signature for a digital message, the method comprising:

selecting a private key for each of a plurality of $t$ members of a ring, wherein each member of the ring is associated with identity information, and wherein each of the private keys is related to the identity information associated with a respective ring member;

computing a public key for each of the $t$ members of the ring set using the respective member's private key, wherein each of the public keys is related to the identity information associated with the respective ring member;

generating a message function value using a predetermined function; and

generating the ring signature using at least the signer's private key, the public key of each of the ($t$-1) ring members other than a signer, and the message function values.

14. A computer program product containing program code for performing the method of claim 13.

Select first and second cyclic groups ⟍ 102

↓

Select pairing function ⟍ 104

↓

Select a generator of the first cyclic group ⟍ 106

↓

Select function to map between
first and second cyclic groups ⟍ 108

↓

Select a private key for each of the signers ⟍ 110

↓

Generate message function values for
each of the messages ⟍ 112

↓

Generate signature components ⟍ 114

↓

Generate multisignature using
signature components ⟍ 116

↓

Verify multisignature ⟍ 118

*FIG. 1*

Select first and second cyclic groups — 202

Select pairing function — 204

Select first and second generators of the first cyclic group — 206

Select first and second secret numbers — 208

Select function to map between first and second cyclic groups — 210

Generate public points for each of the members of the set — 212

Generate a private point for the sender — 214

Generate ring signature — 216

Verify that ring signature was generated by a member of the set — 218

## FIG. 2

Generate cyclic groups — 302

Select function *e* — 304

Select root generator of first group — 306

Select root key generation secret — 308

Generate root key generation parameter — 310

Select first hash function — 312

Select second hash function — 314

Generate lower-level PKG public elements — 316

Select lower-level key generation secrets — 318

Generate lower-level PKG secret elements — 320

Generate lower-level key generation parameters — 322

Generate ring member public elements — 324

Generate ring member secret elements — 326

Generate ring signature — 328

Verify ring signature — 330

*FIG. 3*

```
┌─────────────────────────────────────┐
│        Generate cyclic groups        │╲ 402
└─────────────────────────────────────┘
                  ▼
┌─────────────────────────────────────┐
│           Select function e          │╲
└─────────────────────────────────────┘  404
                  ▼
┌─────────────────────────────────────┐
│    Select root generator of first group │╲
└─────────────────────────────────────┘  406
                  ▼
┌─────────────────────────────────────┐
│           Select function H          │╲
└─────────────────────────────────────┘  408
                  ▼
┌─────────────────────────────────────┐
│   Select private key for original signer │╲
└─────────────────────────────────────┘  410
                  ▼
┌─────────────────────────────────────┐
│   Generate public key for original signer │╲
└─────────────────────────────────────┘  412
                  ▼
┌─────────────────────────────────────┐
│    Select private key for proxy signer │╲
└─────────────────────────────────────┘  414
                  ▼
┌─────────────────────────────────────┐
│   Generate public key for proxy signer │╲
└─────────────────────────────────────┘  416
                  ▼
┌─────────────────────────────────────┐
│       Generate proxy private key      │╲
└─────────────────────────────────────┘  418
                  ▼
┌─────────────────────────────────────┐
│    Generate message function value    │╲
└─────────────────────────────────────┘  420
                  ▼
┌─────────────────────────────────────┐
│       Proxy signer signs message      │╲
└─────────────────────────────────────┘  422
                  ▼
┌─────────────────────────────────────┐
│        Verify proxy signature         │╲
└─────────────────────────────────────┘  424
```

*FIG. 4*

Generate cyclic groups — 502

Select function *e* — 504

Select root generator of first group — 506

Select root key generation secret — 508

Generate root key generation parameter — 510

Select first hash function — 512

Select second hash function — 514

Generate lower-level PKG public elements — 516

Select lower-level key generation secrets — 518

Generate lower-level PKG secret elements — 520

Generate lower-level
key generation parameters — 522

Generate signer public element — 524

Generate signer secret element — 526

Select random trapdoor secret — 528

Select random message and number — 530

Generate offline signature — 532

Identify number to match offline signature — 534

Verify signature — 536

*FIG. 5*

FIG. 6

**European Patent**
**Office**

**PARTIAL EUROPEAN SEARCH REPORT**

which under Rule 63 of the European Patent Convention EP 08 10 1261
shall be considered, for the purposes of subsequent
proceedings, as the European search report

Application Number

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANHONG ZHANG ED - OSVALDO GERVASI ET AL: "An Efficient Identity-Based Ring Signature Scheme and Its Extension" COMPUTATIONAL SCIENCE AND ITS APPLICATIONS - ICCSA 2007 LECTURE NOTES IN COMPUTER SCIENCE;, SPRINGER BERLIN HEIDELBERG, BE, vol. 4706, 1900, pages 63-74, XP019068364 ISBN: 978-3-540-74475-7 | 12 | INV. H04L9/00 ADD. H04L9/32 |
| A | * the whole document * | 7,8 | |
| A | BONEH B, BEN LYNN AND HOVAV SHACHAM: "SHORT SIGNATURES FROM THE WEIL PAIRING" ASIACRYPT 2001, vol. 17, no. 4, 9 December 2001 (2001-12-09), - 13 December 2001 (2001-12-13) pages 297-319, XP001221154 ISSN: 0933-2790 * the whole document * | 7,8,12 | |
| | -/-- | | |

| | |
|---|---|
| | TECHNICAL FIELDS SEARCHED (IPC) |
| | H04L |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 4 April 2008 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                        
& : member of the same patent family, corresponding document

EPO FORM 1503 03.82 (P04E07)

**European Patent Office**

**PARTIAL EUROPEAN SEARCH REPORT**

Application Number

EP 08 10 1261

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | BONEH D ET AL: "IDENTITY-BASED ENCRYPTION FROM THE WEIL PAIRING" ADVANCES IN CRYPTOLOGY. CRYPTO 2001. 21ST ANNUAL INTERNATIONAL CRYPTOLOGY CONFERENCE, SANTA BARBARA, CA, AUG. 19 - 23, 2001. PROCEEDINGS, LECTURE NOTES IN COMPUTER SCIENCE ; VOL. 2139, BERLIN : SPRINGER, DE, 19 August 2001 (2001-08-19), pages 213-229, XP000988703 ISBN: 3-540-42456-3 * paragraph [0002] - paragraph [0005] * ----- | 7,8,12 | |
| A | SHAMIR A: "IDENTITY-BASED CRYPTOSYSTEMS AND SIGNATURE SCHEMES" LECTURE NOTES IN COMPUTER SCIENCE, SPRINGER VERLAG, BERLIN, DE, 1985, pages 47-53, XP000675444 ISSN: 0302-9743 * the whole document * ----- | 7,8,12 | TECHNICAL FIELDS SEARCHED (IPC) |

EPO FORM 1503 03.82 (P04C10)

**European Patent Office**

**INCOMPLETE SEARCH
SHEET C**

```
Claim(s) searched completely:
      7,8,12

Claim(s) not searched:
      1-6,10,11,13,14

Reason for the limitation of the search (non-patentable invention(s)):

Lack of support from the description
Article 76(1) EPC


      -----

Further limitation of the search

Claim(s) not searched:
      1-6,10,11,13 and 14

Reason for the limitation of the search:

Lack of support from the description
Article 123(2) EPC
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 37266802 P

**Non-patent literature cited in the description**

- Identity-Based Cryptosystems and Signatures Schemes. **A. SHAMIR.** ADVANCES IN CRYPTOGRAPHY - CRYPTO '84, Lecture Notes in Computer Science. Springer, 1984, vol. 196, 47-53
- How to Leak a Secret. **R. RIVEST ; A. SHAMIR ; Y. TAUMAN.** ADVANCES IN CRYPTOLOGY-ASIACRYPT 2001, Lecture Notes in Computer Science. Spring, 2001, vol. 2248, 552
- Self-Certified Keys-Concepts and Applications. **P. HORSTER ; H. PETERSEN.** PROC. 3 OF CONF. ON COMMUNICATIONS AND MULTIMEDIA SECURITY. 1997
- Improved Online/Offline Signature Schemes. **A. SHAMIR ; Y. TAUMAN.** ADVANCES IN CRYPTOLOGY-CRYPTO 2001, Lecture Notes in Computer Science. Springer, 2001, vol. 2139, 355-367